# EUROPÄISCHE PATENTANMELDUNG

(11) **EP 0 894 778 A1**
(43) Veröffentlichungstag der Anmeldung: **03.02.1999**
(21) Anmeldenummer: 98113179.0
(22) Anmeldetag: 15.07.1998
(51) Int. Cl.: C04B 35/626, C04B 35/622, B28B 17/02

(54) **Herstellungsverfahren und Fertigungsanlage für ein keramisches Erzeugnis**

(30) Priorität: 28.07.1997 DE 19732466
(71) Anmelder: SIEMENS AKTIENGESELLSCHAFT, 80333 München (DE)
(72) Erfinder: Liebermann, Johannes, Dipl.-Ing., 96215 Lichtenfels-Schönsreut (DE); Schubert, Wolfgang, 96257 Redwitz (DE); Zapf, Thomas, 96260 Weismain (DE)

(57) **Zusammenfassung**

Es wird ein Herstellungsverfahren und eine Fertigungsanlage (1) zur Herstellung eines keramischen Erzeugnisses (113) angegeben. Es wird den Ausgangsmaterialien (1) oder einer daraus hergestellten Rohmasse ein das Wachstum von Pilzen oder Bakterien hemmendes Mittel (105) beigegeben. Auf diese Weise läßt sich der Produktionsausschuß drastisch verringern und die Effizienz bei der Herstellung eines keramischen Erzeugnisses (113) gegenüber dem Stand der Technik deutlich verbessern.

## Beschreibung

Die Erfindung bezieht sich auf ein Herstellungsverfahren und eine Fertigungsanlage für ein keramisches Erzeugnis mit einem besonders geringen Produktionsausschuß.

Die Herstellung eines keramischen Erzeugnisses, d.h. eines Erzeugnisses aus Tonkeramik, Porzellan oder Steatit, ist an sich bekannt. Dabei werden die Ausgangsmaterialien Kaolin, Quarz, Ton, Tonerde und Feldspat unter Zugabe von diversen Zuschlagstoffen, welche die Herstellung effektiver machen oder die Konsistenz des fertigen keramischen Erzeugnisses beeinflussen, zunächst in der gewünschten Dosierung miteinander vermischt. Die entstandene Mischung wird unter Zugabe eines Lösungsmittels wie Wasser unter eventuellem Mahlen zu einem sogenannten Schlicker, d.h. einer homogenen Aufschlämmung, verarbeitet. Der Schlicker wird dann durch eine Presse entwässert und zu einer formbaren Masse oder Rohmasse verarbeitet, welche durch Pressen, Drehen, Strangziehen oder Gießen zu einem Formkörper verarbeitet wird. Der so erhaltene Formkörper wird getrocknet und durch Sintern zu dem fertigen keramischen Erzeugnis verarbeitet.

Als Zuschlagstoffe sind insbesondere sogenannte Sinterhilfsmittel bekannt, welche durch Absenken der Sintertemperatur die Herstellung kostengünstiger machen. Derartige Sinterhilfsmittel sind beispielsweise Magnesiumoxid, Kalziumoxid, Zinkoxid oder Eisenoxid. Des weiteren sind als Zuschlagstoffe bekannt, sogenannte Flußmittel, welche die Verarbeitung der formbaren Masse oder Rohmasse zu dem Formkörper vereinfachen. Derartige Flußmittel sind beispielsweise Kaliumoxid oder Natriumoxid. Ferner sind auch Metalloxide als Zuschlagstoffe bekannt, welche insbesondere die mechanischen Eigenschaften des keramischen Erzeugnisses günstig beeinflussen. So ist es insbesondere bei einem Erzeugnis der technischen Keramik, wie z.B. einem Hochspannungsisolator, bekannt, den Ausgangsmaterialien Aluminiumoxid beizumengen. Ein derartiges keramisches Erzeugnis auf Aluminiumoxid-Basis zeichnet sich durch eine hohe mechanische Festigkeit sowohl gegenüber Druck als auch Zug und durch eine hohe elektrische Isolierung aus. Auch sind speziell andere Zuschlagstoffe bekannt geworden, welche bei der Herstellung von Gebrauchsporzellan aber auch von keramischen Katalysatoren zugesetzt werden.

Bei der Herstellung eines keramischen Erzeugnisses gemäß der genannten Art und Weise konnte bislang auch durch intensive Bemühungen und Nachforschungen nicht erreicht werden, daß selbst bei einer Fertigungsanlage mit hohem technischen Stand und bei hoher Reinheit der Ausgangsmaterialien der Produktionsausschuß, d.h. der prozentuale Anteil der unbrauchbaren, weil defekten oder den Materialanforderungen nicht genügenden keramischen Erzeugnisse an der Gesamtproduktion, auf das theoretisch zu erwartende Maß abgesenkt werden konnte. So beläuft sich zur Zeit der Produktionsausschuß beispielsweise bei der Herstellung von keramischen Hochspannungsisolatoren typenabhängig auf ca. 30 bis 40 %, wohingegen nach allgemeinem Verständnis lediglich ein Produktionsausschuß von 10 bis 20 % zu erwarten wäre.

Es ist Aufgabe der Erfindung, hier einen Weg zu weisen, wie sich der Produktionsausschuß bei der Herstellung eines keramischen Erzeugnisses gegenüber dem Stand der Technik deutlich verringern läßt.

Diese Aufgabe wird erfindungsgemäß gelöst durch ein Herstellungsverfahren für ein keramisches Erzeugnis, wobei Ausgangsmaterialien zu einer formbaren Rohmasse verarbeitet werden, daraus ein Formstück geformt und das Formstück anschließend zu dem keramischen Erzeugnis gesintert wird, wobei den Ausgangsmaterialien oder der Rohmasse ein das Wachstum von Bakterien oder Pilzen hemmendes Mittel derart beigemengt wird, daß das Wachstum der Bakterien oder Pilze in den Ausgangsmaterialien, der Rohmasse und/oder dem Formstück gehemmt ist.

Die Erfindung geht dabei von der Überlegung aus, daß bei der Herstellung eines keramischen Erzeugnisses die Ausgangsmaterialien, das Lösungsmittel, die Rohmasse oder das Formstück unvermeidbar, beispielsweise über Sporen, mit Bakterien oder Pilzen kontaminiert werden. Diese Bakterien oder Pilze finden in der Aufschlämmung der Rohmaterialien, in der Rohmasse und/oder in dem Formstück geeignete Bedingungen, um Stoffwechsel treiben und sich vermehren zu können. So sind in den Ausgangsmaterialien stets genügend mineralische Erze oder organische Spurenelemente vorhanden, durch deren Aufschließung sich die Bakterien oder Pilze die zum Überleben und Vermehren notwendige Energie besorgen.

Umfangreiche Untersuchungen haben nun gezeigt, daß bei der Herstellung eines keramischen Erzeugnisses nach herkömmlicher Art und Weise die Aufschlämmung der Ausgangsmaterialien, die Rohmasse und der Formkörper durch Pilze, durch aerobe und anaerobe Bakterien in nicht unerheblichem Maße kontaminiert sind. Unter aeroben Bakterien werden dabei solche Bakterien verstanden, welche sich in Gegenwart von Sauerstoff vermehren und Stoffwechsel treiben können. Entsprechend gilt für anaerobe Bakterien, daß sich diese Bakterien unter Abschluß von Sauerstoff vermehren und Stoffwechsel treiben können. Beide Bakteriengruppen können sich vermehren, da der gesamte Herstellungsprozeß eines keramischen Erzeugnisses weder strikt aerob noch anaerob abläuft. Daneben wurden auch noch sogenannte fakultativ anaerobe Bakterien gefunden, welche sich zwar in Gegenwart von Sauerstoff sehr gut vermehren, jedoch nicht mehr in der Lage sind, Stoffwechsel zu betreiben.

Sowohl Pilze als auch Bakterien produzieren durch ihren Stoffwechsel Gase wie Sauerstoff, Kohlendioxid oder Wasserstoff. Dies führt letztendlich zu Gaseinschlüssen in dem Formkörper. Derartige Gaseinschlüsse führen dann zwangsläufig, insbesondere beim Brennen, zu einer Rißbildung in dem Formkörper oder sogar zum Abplatzen einzelner Bruchstücke des Formkörpers. Die Ursache des hohen Produktionsausschusses bei der üblichen Herstellung eines keramischen Erzeugnisses ist damit der Befall durch Bakterien und Pilze.

Der bislang unvermeidliche Produktionsausschuß bei der Herstellung eines keramischen Erzeugnisses läßt sich jedoch vermeiden, wenn den Ausgangsmaterialien oder der Rohmasse ein das Wachstum von Bakterien oder Pilzen hemmendes Mittel beigemengt wird. Auf diese Weise läßt sich die Anzahl der unvermeidlich vorhandenen Bakterien oder Pilze während des Herstellungsprozesses auf ein verträgliches Maß eindämmen, so daß die Gasbildung durch den Stoffwechsel der Bakterien oder Pilze nicht mehr den limitierenden Faktor für die Fertigungssicherheit bei der Herstellung des keramischen Erzeugnisses darstellt. Das das Wachstum von Bakterien oder Pilzen hemmende Mittel (das "hemmende Mittel") kann sowohl in fester als auch in flüssiger Form vorliegen. Das hemmende Mittel wird entweder den Ausgangsmaterialien selbst oder in einem geeigneten nachfolgenden Verarbeitungsschritt beigemengt. Die Dosierung des hemmenden Mittels richtet sich dabei nach seiner Umweltverträglichkeit und nach dem Pilz- oder Bakterienbefall. Insbesondere muß bei einer vorliegenden Umweltunverträglichkeit des hemmenden Mittels darauf geachtet werden, daß das bei dem Herstellungsverfahren eingesetzte Lösungsmittel, meist Wasser, von dem eingesetzten hemmenden Mittel durch ein geeignetes Reinigungsverfahren wie z.B. einer Filterung gereinigt wird. Auch ist es möglich, das verwendete Lösungsmittel in einem geschlossenen Kreislauf dem Herstellungsprozeß wieder zurückzuführen.

Das hemmende Mittel soll die Materialeigenschaften des fertigen keramischen Erzeugnisses nicht ungünstig beeinflussen. So sollen insbesondere Eigenschaften wie elektrische Isolierung oder Härte unbeeinflußt bleiben. Auch soll die Erweichungstemperatur des Formstücks nicht negativ verändert werden, damit der Brenn- oder Sintervorgang unbeeinflußt bleibt. Das hemmende Mittel sollte daher entweder in dem Lösungsmittel löslich, thermisch zersetzbar oder mit einer gewissen Verfallzeit ausgestattet sein. Auf diese Weise findet sich das hemmende Mittel in dem fertigen keramischen Erzeugnis nicht mehr. Das hemmende Mittel kann jedoch auch so ausgewählt sein, daß es im fertigen Produkt zwar vorhanden ist, es jedoch die Materialeigenschaften nicht beeinflußt.

Falls die Ausgangsmaterialien zunächst durch Zugabe eines Lösungsmittels unter eventuellem Mahlen zu einem Schlicker verarbeitet werden, aus welchem die Rohmasse abgepreßt wird, ist es besonders einfach und kostengünstig, das hemmende Mittel dem Schlicker beizumengen. Es hat sich nämlich gezeigt, daß insbesondere ein Schlicker, falls ein solcher zur Herstellung des keramischen Erzeugnisses verwendet wird, in hohem Maße durch Bakterien und Pilze kontaminiert ist. Es ist daher besonders effektiv, das hemmende Mittel direkt dem Schlicker beizumengen. Auch ist diese Vorgehensweise sehr wirkungsvoll, da nach der Zugabe des hemmenden Mittels zu dem Schlicker weitere Misch-, Preß- und Knetvorgänge folgen, welche zu einer intensiven Durchmischung der entstehenden Rohmasse mit dem zugegebenen hemmenden Mittel führen.

Vorteilhafterweise beträgt der Anteil des beigemengten hemmenden Mittels zwischen 250 und 1000 ppm der Masse des Rücklaufschlickers. Auf diese Weise ist zum einen sichergestellt, daß die Pilz- oder Bakterienanzahl in einem unkritischen Rahmen gehalten wird, ohne daß hierdurch ein Produktionsausfall zu erwarten ist, und zum anderen wird hierdurch erreicht, daß das bei dem Herstellungsprozeß anfallende Lösungsmittel nur sehr gering mit dem hemmenden Mittel belastet ist.

Insbesondere bei der Formung des Formstücks durch Abdrehen der Rohmasse fällt eine große Menge an Abfallmaterial an. Dieses Abfallmaterial liegt häufig eine gewisse Zeit völlig ungeschützt und offen in einem Sammelbehälter, ehe es wieder in den Herstellungsprozeß zurückgeführt wird. Während dieser Zeit wird das Abfallmaterial durch Pilze oder Bakterien aus der Umgebungsluft besiedelt, so daß über die Rückführung des Abfallmaterials besagte Pilze und Bakterien in den gesamten Herstellungsprozeß eingeschleust werden. Es ist daher vorteilhaft, wenn das das Wachstum von Bakterien oder Pilzen hemmende Mittel direkt dem Abfallmaterial beigemengt und zusammen mit diesem in den Herstellungsprozeß eingeschleust wird.

Besonders günstig für die Verteilung des hemmenden Mittels in dem Abfallmaterial ist es, wenn bei der Herstellung des keramischen Erzeugnisses das Abfallmaterial zu einem Rücklaufschlicker verarbeitet wird und das hemmende Mittel dem Rücklaufschlicker beigegeben wird. Der Rücklaufschlicker wird dabei aus dem bei der Formung des Formstücks anfallenden Abfallmaterial unter Zugabe eines Lösungsmittels und des hemmenden Mittels durch Mahlen und Mischen hergestellt und dem Schlicker der Ausgangsmaterialien beigegeben. Die Menge des zugegebenen hemmenden Mittels richtet sich dabei nach dem Verhältnis zwischen Rücklaufschlicker und Schlicker.

Ein die Umwelt vergleichsweise wenig belastendes, hemmendes Mittel ist Kaliumpermanganat (KMnO₄).

Für eine effektive Eindämmung des Bakterien- oder Pilzwachstums in dem Schlicker, der Rohmasse oder dem Formkörper ist es vorteilhaft, wenn das hemmende Mittel ein Biozid, d.h. ein tierisches und/oder pflanzliches Leben abtötendes Mittel, wie z.B. ein Desinfektionsmittel, ein Fungizid oder ein Bakterizid, ist. Dabei sind insbesondere die Mittel Warosit 265, Contram 101 und/oder NBF 20 mit verhältnismäßig geringer Dosierung sehr effektiv. Warosit 265, Contram 101 und NBF 20 sind dabei Handelsnamen für gebräuchliche Biozide der Firma Woellner Werke, Ludwigshafen, und Becker-Chemie, Hamburg.

Da Bakterien und Pilze aufgrund ihres schnellen Generationswechsels durch Mutation sehr rasch resistent gegen ein eingesetztes Biozid werden, ist es vorteilhaft, das jeweils eingesetzte Biozid in regelmäßigen zeitlichen Abständen gegen ein Biozid einer anderen chemischen Zusammensetzung auszutauschen.

Die Aufgabe führt weiter zu einer Fertigungsanlage zur Herstellung eines keramischen Erzeugnisses. Dabei weist die Fertigungsanlage eine Masseaufbereitungs-Vorrichtung zur Aufbereitung einer formbaren Rohmasse aus Ausgangsmaterialien, insbesondere umfassend einen Mischbottich und eine Filterpresse, eine an der Masseaufbereitungs-Vorrichtung, insbesondere an dem Mischbottich, angeschlossene Zuführleitung, über welche ein Lösungsmittel zuführbar ist, und einen an der Masseaufbereitungs-Vorrichtung, insbesondere an der Filterpresse, angeschlossenen Ablauf, über welche das Lösungsmittel abführbar ist, eine Formgebungs-Vorrichtung, insbesondere umfassend eine Vakuumpresse und eine Drehmaschine, zum Herstellen eines Formstücks aus der formbaren Rohmasse und einen Sinterofen zur Sinterung des Formstücks auf. Erfindungsgemäß umfaßt die Fertigungsanlage zusätzlich einen Vorratsbehälter, in welchem ein das Wachstum von Bakterien oder Pilzen hemmendes Mittel lagerbar ist, einen an dem Vorratsbehälter angeordneten Anschluß, mittels welchem das das Wachstum von Bakterien oder Pilzen hemmende Mittel der Masseaufbereitungs-Vorrichtung, insbesondere dem Mischbottich, zuführbar ist, und eine dem Anschluß zugeordnete Dosiervorrichtung, mittels derer die Zuführmenge des hemmenden Mittels dosierbar ist.

Über den Anschluß an die Vorrichtung zur Herstellung der Rohmasse kann dabei das hemmende Mittel über die Dosiervorrichtung in gewünschter Dosierung entweder den Ausgangsmaterialien selbst oder den weiterverarbeiteten Ausgangsmaterialien in nachfolgenden Arbeitsschritten beigegeben werden. Die zur Dosierung des hemmenden Mittels vorgesehene Dosiervorrichtung kann dabei als ein steuerbares Ventil, welches den Zufluß eines flüssigen hemmenden Mittels beeinflußt, oder aber auch als eine entsprechend ausgebildete pneumatische Einblas- oder Einsprühvorrichtung ausgebildet sein. Insbesondere bei einem flüssigen hemmenden Mittel kann der Vorratsbehälter unter Druck gehalten werden, so daß das hemmende Mittel einfach durch Öffnen und Schließen eines geeigneten Einlaßventils beigemengt wird.

Das bei der Herstellung der formbaren Rohmasse aus den Ausgangsmaterialien anfallende Lösungsmittel wird in einem geeigneten Ablauf aufgefangen und, falls keine Rückführung des aufgefangenen Lösungsmittels vorgesehen ist, bislang im Falle von Wasser ungeklärt an die Umwelt abgegeben. Für den Fall, daß ein hemmendes Mittel den Ausgangsmaterialien oder der Rohmasse beigemengt wird, welches umweltunverträglich ist, wird es aufgrund vorgegebener Umweltauflagen erforderlich, daß der Ablauf ein Reinigungssystem zur Entfernung des hemmenden Mittels aus dem Lösungsmittel, insbesondere Wasser, umfaßt. Dieses Reinigungssystem kann beispielsweise ein geeignetes Filtersystem sein, welches mit entsprechenden Adsorbermaterialien das eingesetzte hemmende Mittel aus dem Lösungsmittel filtriert. Die mit dem hemmenden Mittel beaufschlagten Filter oder Adsorbermaterialien können dann entweder auf einer Deponie endgelagert oder durch eine geeignete Temperaturbehandlung unschädlich gemacht werden.

Besonders vorteilhaft ist es, wenn der Ablauf eine Rücklaufleitung zur teilweisen Rückführung des abgelaufenen Lösungsmittels in die Vorrichtung zur Herstellung der Rohmasse und eine Ablaufleitung zum teilweisen Ablassen des angelaufenen Lösungsmittels umfaßt. Auf diese Weise kann zunächst durch Schließen der Ablaufleitung ein geschlossener Kreislauf des Lösungsmittels der Fertigungsanlage erzielt werden. Falls das Lösungsmittel verbraucht ist, kann durch Öffnen der Ablaufleitung das verbrauchte Lösungsmittel aus der Fertigungsanlage entfernt werden. Für einen kontinuierlichen Fertigungsablauf der Fertigungsanlage ist es auch möglich, ständig einen gewissen Teil des Lösungsmittels über die Rücklaufleitung der Fertigungsanlage zurückzuführen und einen gewissen Teil des abgelaufenen Lösungsmittels teilweise über die Ablaufleitung abzulassen. In der Rücklaufleitung ist hierbei ein Anschluß zur Zubringung frischen Lösungsmittels vorgesehen. Auf diese Weise wird eine ständige Erneuerung des in der Fertigungsanlage verbliebenen Lösungsmittels erzielt, ohne daß hierbei ein Fertigungsstillstand auftritt.

Besonders vorteilhaft ist es, wenn das Reinigungssystem an der Ablaufleitung angeordnet ist. Auf diese Weise ist sichergestellt, daß das abgelassene, mit dem hemmenden Mittel kontaminierte Lösungsmittel nicht ungereinigt in die Umwelt gelangt.

Ausführungsbeispiele der Erfindung werden anhand einer Zeichnung sowie anhand eines Beispiels näher erläutert.

Dabei zeigen in der Zeichnung:
- FIG 1: schematisch ein Herstellungsverfahren für einen keramischen Hochspannungsisolator, und
- FIG 2: eine Fertigungsanlage zur Herstellung eines keramischen Hochspannungsisolators.

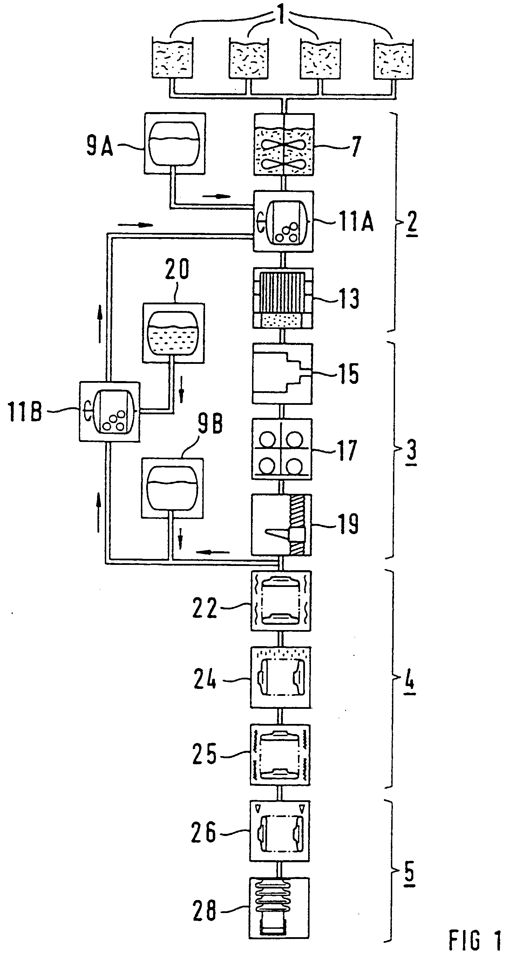

In Figur 1 ist schematisch ein Herstellungsverfahren für einen keramischen Hochspannungsisolator gezeigt. Als Ausgangsmaterialien 1 werden hierzu Kaolin, Ton, Feldspat und Aluminiumoxid verwendet. Das Herstellungsverfahren umfaßt das Verarbeiten 2 der Ausgangsmaterialien 1 zu einer Rohmasse, Formen 3 der Rohmasse zu einem Formstück in Gestalt eines mit Schirmen versehenen Hohlzylinders, Sintern 4 des Formkörpers und Endbearbeiten 5 des gesinterten Formkörpers zu dem fertigen Hochspannungsisolator.

Das Verarbeiten 2 der Ausgangsmaterialien 1 zu einer formbaren Rohmasse geschieht dabei über die einzelnen Schritte Mischen 7 der Ausgangsmaterialien, Mahlen 11A der entstandenen Mischung in einer mit Mahlkugeln versehenen Trommelmühle unter Wasserzugabe 9A zu einem Schlicker und Filterpressen 13 des Schlickers unter Abpressen des zugegebenen Wassers. Nach dem Filterpressen 13 liegt eine formbare Rohmasse der Ausgangsmaterialien 1 vor, welche durch den anschließenden Prozeß des Formens 3 zu einem Formstück verarbeitet wird.

Das Formen 3 umfaßt hierbei ein Strangpressen 15 zur Pressung von hohlzylindrischen Rohlingen aus der Rohmasse, ein daran anschließendes Trocknen 17 der Rohlinge und ein Formdrehen 19, wodurch durch Abdrehen die hohlzylindrischen Rohlinge mit tellerförmigen Schirmen versehen werden, so daß ein Formkörper in Gestalt des Hochspannungsisolators erhalten wird. Das beim Formdrehen 19 anfallende, in Form von Spänen vorliegende Abfallmaterial wird unter erneuter Wasserzugabe 9B und erneutem Mahlen 11B zu einem Rücklaufschlicker verarbeitet, welcher wieder in den Verarbeitungsprozeß zurückgeführt wird. Bei dem Mahlen 11B des Rücklaufschlickers erfolgt zur Eindämmung des Bakterien- oder Pilzwachstums eine Biozidzugabe 20. Als Biozide werden dabei NBF 20 mit einer Konzentration von 300 ppm, Contram 101 mit einer Konzentration von 450 ppm oder Warosit 265 mit einer Konzentration von 250 ppm der Masse des Rücklaufschlickers zugemengt. In einem Turnus von drei Monaten wird das jeweils verwendete Biozid gegen ein anderes Biozid ausgetauscht. Auf diese Weise wird eine Resistenz der Bakterien oder der Pilze gegen das eingesetzte Biozid sicher verhindert.

Das Sintern 4 des beim Formdrehen 19 erhaltenen Formstücks umfaßt das Trocknen 22 des Formstücks, das Glasieren 24 des getrockneten Formstücks und daran anschließend das Brennen 25 des glasierten Formstücks in einem geeigneten Brenn- oder Sinterofen.

Das gebrannte oder gesinterte, glasierte Formstück wird anschließend endbearbeitet 5. Durch Schneiden 26 wird das Formstück auf die gewünschte Länge gebracht und durch Armieren 28 mit geeigneten Anschlußstücken versehen. Damit liegt der fertige Hochspannungsisolator vor.

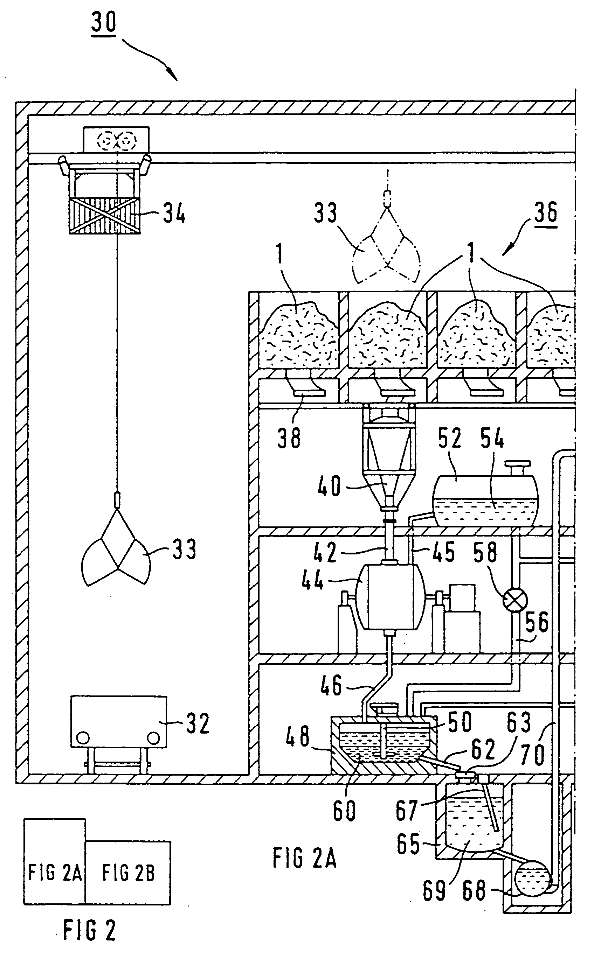

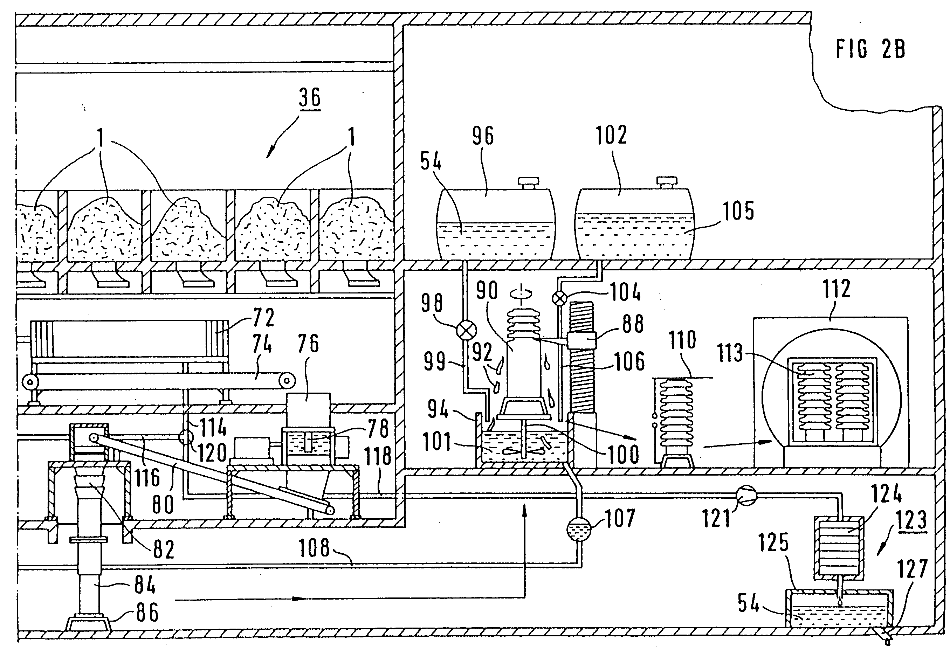

Figur 2 zeigt eine Fertigungsanlage 30 zur Herstellung eines keramischen Hochspannungsisolators. Die Ausgangsmaterialien 1 wie Kaolin, Ton, Feldspat, Aluminiumoxid sowie Sinterhilfsmittel wie Kalziumoxid, Magnesiumoxid oder Zinkoxid und weitere Zuschlagstoffe wie Flußmittel werden über einen Waggon 32 in die Fertigungsanlage 30 eingebracht. Über einen Greifer 33 eines Portalkrans 34 werden die jeweiligen Ausgangsmaterialien 1 in einen Bunker 36 zur Aufbewahrung befördert. Über eine Austragevorrichtung 38 werden die jeweiligen Ausgangsmaterialien 1 in eine Bunkerwaage 40 in der jeweils gewünschten Menge eingebracht. Die derart eingewogenen Ausgangsmaterialien 1 werden über ein Füllrohr 42 in eine Trommelmühle 44 geleitet. Die Trommelmühle 44 ist hierbei als eine um eine horizontal liegende Achse drehbare Kugelmühle ausgebildet, welche durch Mahlkugeln die Ausgangsmaterialien gleichzeitig mahlt und mischt. Zum besseren Mahlen und Mischen wird der Trommelmühle 44 über die Zuführleitung 45 als Lösungsmittel 54 Wasser zugeführt.

Die homogenisierte Mischung der Ausgangsmaterialien 1 wird über eine Ablaßleitung 46 in einen Mischbottich 48 geleitet. In diesem Mischbottich 48 ist ein Schraubenquirl 50 angeordnet, welcher die zugeführte Mischung erneut miteinander vermengt. An den Mischbottich 48 ist eine Zuführleitung 56 angeschlossen, über welche das in einem Tank 52 aufbewahrte Lösungsmittel 54 Wasser mittels eines Dosierventils 58 zugegeben wird. Die mit Hilfe des Schraubenquirls 50 erzeugte Aufschlämmung 60 der Ausgangsmaterialien 1 mit Wasser wird über eine Ablaßrinne 62 und über ein Viskosesieb 63 einem Tiefbassin 65 zugeführt. In dem Tiefbassin 65 erfolgt mittels eines Rührpendels 67 die Herstellung eines Schlickers 69, d.h. einer innigen, homogenisierten, wäßrigen Mischung der Ausgangsmaterialien 1. Der Schlicker 69 wird schließlich in einen Druckkessel 68 befördert, und über eine Schlickerdruckleitung 70 einer Filterpresse 72 zugeführt.

Die Filterpresse 72 erzeugt durch Abpressen des Lösungsmittels 54 aus dem Schlicker 69 eine knet- und formbare Rohmasse. Diese Rohmasse wird mittels eines Förderbandes 74 dem Aufgabeschacht 76 eines Siebkneters 78 zugeführt. Die mittels des Siebkneters 78 aufbereitete Rohmasse wird mittels eines weiteren Förderbandes 80 einer vertikalen Vakuumpresse 82 zugeführt. Dort wird nach dem Prinzip des Strangpressens aus der aufbereiteten Rohmasse ein hohlzylindrischer Formkörper oder ein sogenannter Hohlhubel 84 gepreßt. Dieser Hohlhubel 84 wird zur weiteren Beförderung auf einen Abstelltisch 86 gestellt.

Mittels des Abstelltisches 86 wird der Hohlhubel 84 einer Drehmaschine 88 zugeführt. Die Drehmaschine 88 dreht durch Auf- und Abbewegung einer entsprechenden Schneidevorrichtung aus dem Hohlhubel 84 ein hohlzylindrisches, mit tellerförmigen Schirmen versehenes Formstück 90 in Gestalt des Hochspannungsisolators.

Die bei dem Abdrehen des Hohlhubels 84 anfallenden Hubelspäne 92 werden in einem Auffangbottich 94 unterhalb der Drehmaschine 88 aufgefangen. Über einen Tank 96 mit Wasser als Lösungsmittel 54 wird hierbei mittels eines Dosierventils 98 über eine Zuführleitung 99 Wasser in gewünschter Menge zugegeben. Durch einen kombinierten Mahl- und Rührquirl 100 wird in dem Auffangbottich 94 unter Zugabe von Wasser aus den Hubelspänen 92 ein sogenannter Rücklaufschlicker 101, d.h. eine homogene wäßrige Aufschlämmung der Hubelspäne 92, erzeugt.

Da insbesondere der Rücklaufschlicker 101 besonders mit Bakterien und Pilzen kontaminiert ist, wird aus einem Vorratsbehälter 102 über einen Anschluß 106 mittels einer geeigneten Dosiervorrichtung 104, als ein das Wachstum von Bakterien oder Pilzen hemmendes Mittel 105 ein Biozid dem Rücklaufschlicker 101 zugegeben. Als Biozide werden dabei die unter dem Markennamen Warosit 265, Contram 101 und NBF 20 der Firma Becker-Chemie, Hamburg, mit einer Konzentration von 250 ppm, 300 ppm bzw. 450 ppm zugesetzt. In einem Turnus von drei Monaten wird das jeweils eingesetzte Biozid gegen ein Biozid anderer chemischer Zusammensetzung ausgetauscht. Auf diese Weise wird eine Resistenz der Bakterien oder Pilzen sicher vermieden.

Der mit dem Biozid versetzte Rücklaufschlicker 101 wird mittels eines Druckbottichs 107 über eine Rücklaufleitung 108 dem Mischbottich 48 zur Zubereitung der Aufschlämmung 60 zugeführt.

Das Formstück 90 wird mittels einer elektrischen Trockenanlage 110 von der Restfeuchtigkeit befreit und anschließend in einem Sinterofen 112 zu dem fertigen keramischen Erzeugnis 113 eines Hochspannungsisolators gesintert.

Die Filterpresse 72 weist des weiteren einen Ablauf 114 für das abgepreßte Wasser auf. Der Ablauf 114 spaltet sich dabei in eine Rücklaufleitung 116 zur Rückführung des aufgefangenen Wassers in die Zuführleitung 56 und in eine Ablaufleitung 118 zum Ablassen des aufgefangenen Wassers auf. Mittels eines Steuerventils 120 ist die in die Rücklaufleitung 116 und in die Ablaufleitung 118 jeweils abfließende Wassermenge steuerbar. Die Ablaufleitung 118 ist mit einer Druckpumpe 121 versehen, welche das abgelaufene Wasser durch ein Reinigungssystem 123 preßt, welches einen mit einem entsprechenden Adsorbierungsmittel beschichteten Filter 124 zur Entfernung des Biozids umfaßt. Das von dem Biozid gereinigte Wasser wird in einem Auffangbehälter 125 aufgefangen und über einen Auslaß 127 an die Umgebung abgegeben.

Das Steuerventil 120 kann bei Betrieb der Fertigungsanlage 30 so eingestellt sein, daß das von der Filterpresse 72 aufgefangene Wasser vollständig über die Rücklaufleitung 116 in den Herstellungsprozeß zurückgeführt wird. Auf diese Weise ergibt sich ein geschlossener Lösungsmittelkreislauf. Nur bei Bedarf kann das Steuerventil hinsichtlich der Ablaufleitung 118 geöffnet werden, so daß verbrauchtes und mit dem Biozid kontaminiertes Wasser über die Ablaufleitung 118 und über das Reinigungssystem 123 gereinigt an die Umwelt abgelassen werden kann. Für den Zeitraum des hinsichtlich der Ablaufleitung 118 geöffneten Steuerventils 120 ergibt sich jedoch ein Fertigungsstillstand der Fertigungsanlage 30. Um einen kontinuierlichen Betrieb der Fertigungsanlage 30 zu gewährleisten, kann das Steuerventil 120 auch so geschaltet sein, daß stets ein Teil des aufgefangenen Wassers über die Ablaufleitung 118 abgelassen und ein anderer Teil über die Rücklaufleitung 116 dem Verarbeitungsprozeß zurückgeführt wird.

Als Beispiel werden an mehreren Stellen einer Fertigungsanlage gemäß Figur 2 der Verarbeitungsmasse Proben entnommen und der Bakterienbefall festgestellt. Dem Rücklaufschlicker der Fertigungsanlage sind dabei 500 ppm des Biozids Warosit beigemengt. Vier Teile des Rücklaufschlickers werden dabei mit einem Teil frischen Schlickers gemischt. Für den Bakterienbefall wird die Gesamtkeimzahl aerober Bakterien mittels Standard-Agar, die Gesamtkeimzahl der fakultativ anaeroben Bakterien mittels Endo-C-Agar und die Gesamtkeimzahl anaerober Bakterien mittels Thioglycolat-Bouillon ermittelt. Es werden als Probe Nr. 1 Hubelspäne aus der Drehmaschine, als Probe Nr. 2 ein Teil der formbaren Rohmasse und als Probe Nr. 3 ein Schlicker entnommen. Zusätzlich wird als Probe Nr. 4 eine mit Kaliumpermanganat behandelte, ca. zwei Wochen alte Rohmasse betrachtet. Der jeweils gefundene Bakterienbefall in Anzahl der Bakterien pro Gramm Trockengewicht ist in Tabelle 1 dargestellt.

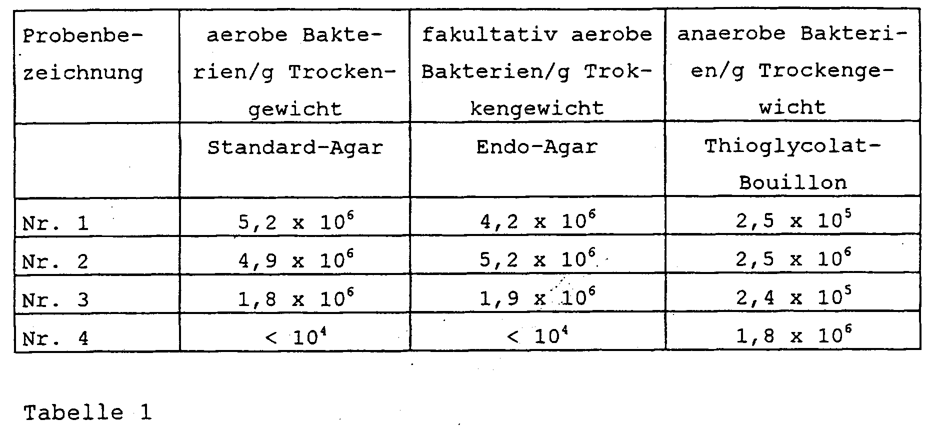

Die mit 0,5 % Kaliumpermanganat behandelte Probe Nr. 4 zeigt, obwohl diese Probe ca. zwei Wochen offen im Laborbereich stand, gegenüber den Proben Nr. 1, Nr. 2 und Nr. 3 eine Reduzierung der aeroben und fakultativ aeroben Bakterienzahl. Es waren weniger als 10⁴ Keime pro g Trockengewicht vorhanden. Die Erhöhung der anaeroben Bakterienzahl ist eine Folge der Kontamination der Probe Nr. 4 im Laborbereich.

Zur Verdeutlichung der Bakterienreduktion wird der Bakterienbefall entsprechender Proben Nr. 1 bis Nr. 4 einer Fertigungsanlage gemäß Figur 2 ohne den Einsatz eines Biozids bestimmt. Das Ergebnis für den Fall aerober Bakterien ist in Tabelle 2 dargestellt.

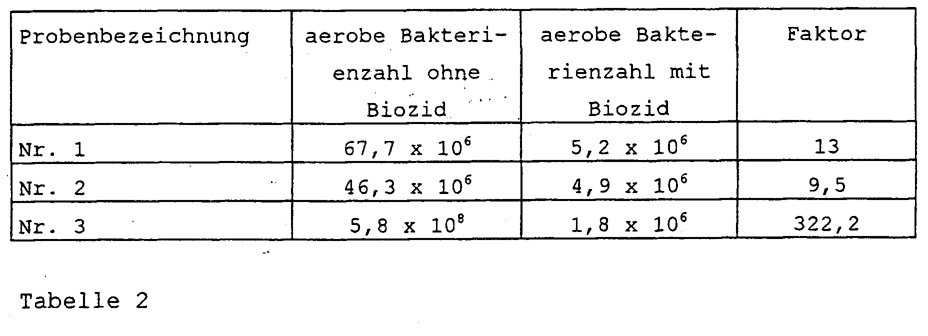

Die erste Spalte zeigt die aufgefundene aerobe Bakterienzahl in Bakterien/g Trockengewicht ohne den Einsatz eines Biozids, die zweite Spalte zeigt die aerobe Bakterienzahl in Bakterien/g Trockengewicht entsprechend Tabelle 1 mit Einsatz des Biozids Warosit und die dritte Spalte zeigt den Verringerungsfaktor der Gesamtbakterienanzahl. Es ist deutlich zu erkennen, daß der Einsatz eines Biozids eine Verringerung der Gesamtzahl der aeroben Bakterien um einen Faktor von größer als etwa 10 bewirkt. Der Produktionsausschuß der Fertigungsanlage wird bei einem derartigen Einsatz eines Biozids um 40% verringert.

## Patentansprüche

1. Herstellungsverfahren für ein keramisches Erzeugnis (113), wobei Ausgangsmaterialien (1) zu einer formbaren Rohmasse verarbeitet werden (2), daraus ein Formstück (90) geformt (3) und das Formstück (90) anschließend zu dem keramischen Erzeugnis (113) gesintert wird (4),
**dadurch gekennzeichnet**, daß den Ausgangsmaterialien (1) oder der Rohmasse ein das Wachstum von Bakterien oder Pilzen hemmendes Mittel (105) derart beigemengt wird (20), daß das Wachstum der Bakterien oder Pilze in den Ausgangsmaterialien (1), der Rohmasse und/oder dem Formstück (90) gehemmt ist.

2. Herstellungsverfahren nach Anspruch 1,
**dadurch gekennzeichnet**, daß die Ausgangsmaterialien (1) zunächst zu einem Schlicker (68) verarbeitet werden, aus welchem die Rohmasse abgepreßt wird (13), und daß das hemmende Mittel (105) dem Schlicker (68) beigemengt wird.

3. Herstellungsverfahren nach Anspruch 2,
**dadurch gekennzeichnet**, daß der Anteil des beigemengten hemmenden Mittels (105) zwischen 250 und 1000 ppm der Masse des Schlickers (68) beträgt.

4. Herstellungsverfahren nach Anspruch 1,
**dadurch gekennzeichnet**, daß das hemmende Mittel (105) zusammen mit einem Abfallmaterial beigemengt wird, welches bei der Durchführung des Herstellungsverfahrens anfällt.

5. Herstellungsverfahren nach Anspruch 4,
**dadurch gekennzeichnet**, daß das Abfallmaterial zu einem Rücklaufschlicker (101) verarbeitet wird und das hemmende Mittel (105) dem Rücklaufschlicker (101) beigegeben wird.

6. Herstellungsverfahren nach einem der Ansprüche 1 bis 5,
**dadurch gekennzeichnet**, daß als hemmendes Mittel (105) Kaliumpermanganat (KMnO₄) beigemengt wird.

7. Herstellungsverfahren nach einem der Ansprüche 1 bis 5,
**dadurch gekennzeichnet**, daß als hemmendes Mittel (105) ein Biozid beigemengt wird.

8. Herstellungsverfahren nach Anspruch 7,
**dadurch gekennzeichnet**, daß in regelmäßigen zeitlichen Abständen das jeweils eingesetzte Biozid gegen ein Biozid einer anderen chemischen Zusammensetzung ausgetauscht wird.

9. Fertigungsanlage (30) zur Herstellung eines keramischen Erzeugnisses (113) mit einer Masseaufbereitungs-Vorrichtung zur Aufbereitung einer formbaren Rohmasse aus Ausgangsmaterialien (1), insbesondere umfassend einen Mischbottich (48) und eine Filterpresse (72), mit einem an der Masseaufbereitungs-Vorrichtung, insbesondere an dem Mischbottich (48), angeschlossenen Zuführleitung (48), über welche ein Lösungsmittel (54) zuführbar ist, und einem an der Masseaufbereitungs-Vorrichtung, insbesondere an der Filterpresse (72), angeschlossenen Ablauf (114), über welche das Lösungsmittel abführbar ist, mit einer Formgebungs-Vorrichtung, insbesondere umfassend eine Vakuumpresse (82) und eine Drehmaschine (88), zum Herstellen eines Formstücks (90) aus der formbaren Rohmasse und mit einem Sinterofen (112) zur Sinterung des Formstücks (90),
**dadurch gekennzeichnet,** daß zusätzlich ein Vorratsbehälter (102) vorgesehen ist, in welchem ein das Wachstum von Bakterien oder Pilzen hemmendes Mittel (105) lagerbar ist, daß an dem Vorratsbehälter (102) ein Anschluß (106) angeordnet ist, mittels welchem das das Wachstum von Bakterien oder Pilzen hemmende Mittel (105) der Masseaufbereitungs-Vorrichtung, insbesondere dem Mischbottich (48), zuführbar ist, und daß dem Anschluß (106) eine Dosiervorrichtung (104) zugeordnet ist, mittels derer die Zuführmenge des hemmenden Mittels (105) dosierbar ist.

10. Fertigungsanlage (30) nach Anspruch 9,
**dadurch gekennzeichnet**, daß an den Ablauf (114) ein Reinigungssystem (123) zur Entfernung des hemmenden Mittels (105) aus dem Lösungsmittel (54) angeschlossen ist.

11. Fertigungsanlage (30) nach Anspruch 10,
**dadurch gekennzeichnet**, daß der Ablauf (114) eine Rücklaufleitung (116) zur teilweisen Rückführung des abgelaufenen Lösungsmittels (54) in die Vorrichtung zur Herstellung der Rohmasse und eine Ablaufleitung (118) zum teilweisen Ablassen des abgelaufenen Lösungsmittels (54) umfaßt.

12. Fertigungsanlage (30) nach Anspruch 11,
**dadurch gekennzeichnet**, daß das Reinigungssystem (123) an der Ablaufleitung (118) angeordnet ist.

13. Fertigungsanlage (30) nach einem der Ansprüche 10 bis 12,
**dadurch gekennzeichnet**, daß das Reinigungssystem (123) einen von dem Lösungsmittel (54) durchströmbaren Filter (124) zum Entfernen und Speichern des hemmenden Mittels (105) umfaßt.
